# EUROPÄISCHE PATENTSCHRIFT

(11) **EP 0 541 570 B1**
(45) Veröffentlichungstag und Bekanntmachung des Hinweises auf die Patenterteilung: **14.12.1994**
(21) Anmeldenummer: 91911844.8
(22) Anmeldetag: 28.06.1991
(51) Int. Cl.: F15B 7/08, B60T 11/16

(54) **GEBERZYLINDER FÜR HYDRAULISCHE ANLAGEN UND VERFAHREN ZUR FERTIGUNG EINER AUSGLEICHSÖFFNUNG**
MASTER CYLINDER FOR HYDRAULIC SYSTEMS, AND PROCESS FOR PRODUCING A COMPENSATION APERTURE
MAITRE-CYLINDRE POUR SYSTEMES HYDRAULIQUES ET PROCEDE DE FABRICATION D'UN ORIFICE COMPENSATEUR

(30) Priorität: 02.08.1990 DE 4024483
(43) Veröffentlichungstag der Anmeldung: 19.05.1993
(73) Patentinhaber: ITT Automotive Europe GmbH, 60488 Frankfurt (DE)
(72) Erfinder: SAALBACH, Kurt, D-6082 Mörfelden-Walldorf (DE); KALLMEYER, Werner, D-3170 Gifhorn (DE); BERGELIN, Klaus, D-6272 Niedernhausen (DE); PREUSS, Heinz-J., D-3170 Gifhorn (DE); STRAUSS, Günter, D-3170 Gifhorn (DE)
(86) Internationale Anmeldenummer: EP9101212
(87) Internationale Veröffentlichungsnummer: WO9202732

(56) Entgegenhaltungen:
- DE-A- 1 655 303
- US-A- 3 040 534

## Beschreibung

Die Erfindung betrifft einen Geberzylinder für hydraulische Anlagen, insbesondere Bremsanlagen und befaßt sich mit dem Leerweg des Betätigungskolbens.

Bekannt sind Geberzylinder für hydraulische Anlagen gemäß dem Oberbegriff des Patentanspruchs 1, beispielsweise Hauptzylinder oder Tandemhauptzylinder zur direkten oder indirekten hydraulischen Betätigung einer Bremsanlage oder einer Kupplung eines Kraftfahrzeugs (s. "Bremsenhandbuch", Bartsch-Verlag, Ottobrunn bei München, insbesondere Seiten 34,52,77,123). Diese Geberzylinder weisen in der Wand ihres Zylindergehäuses mindestens eine kleine Ausgleichsöffnung auf, über die Hydraulikflüssigkeit aus einem Vorratsbehälter in den Druckraum im Inneren des Zylinders fließen kann und umgekehrt. Ein Betätigungskolben gibt diese Ausgleichsöffnung zum Flüssigkeitsausgleich frei, wenn er sich in Ruhestellung befindet. Bei der Betätigung der Anlage wird der Betätigungskolben über die genannte Ausgleichsöffnung geschoben und verschließt sie. Erst wenn die Öffnung verschlossen ist, kann vom Kolben im genannten Druckraum hydraulischer Druck zur Betätigung der hydraulischen Anlage erzeugt werden. Dabei legt der Betätigungskolben einen Leerweg zurück, der mindestens der in Richtung des Kolbenweges gemessenen Breite der Ausgleichsöffnung auf der Innenseite des Zylindergehäuses entspricht.

Die Ausgleichsöffnungen bekannter Geberzylinder sind als Bohrung mit kreisförmigem Querschnitt ausgeführt. Der Leerweg des Kolbens ist dann mindestens so groß wie der Durchmesser der Ausgleichsbohrung. Andererseits bestimmt der Durchmesser die Querschnittsfläche der Bohrung. Da aber die Querschnittsfläche der Ausgleichsöffnung im Interesse eines ausreichend großen Durchsatzes von Hydraulikflüssigkeit ein gewisses Maß nicht unterschreiten darf, ist dem Durchmesser der Bohrung und damit dem Leerweg des Betätigungskolbens eine untere Grenze gesetzt. Insbesondere bei hydraulischen Bremsanlagen von Kraftfahrzeugen ist man bestrebt, den Leerweg möglichst klein zu halten, um ein schnelles Ansprechen der Bremse zu gewährleisten und damit den Bremsweg zu verkürzen. Daß der Leerweg bei der bekannten Verwendung von Bohrungen mit kreisförmigem Querschnitt als Ausgleichsöffnung nicht weiter verkürzt werden kann, muß also als Nachteil gewertet werden.

Davon ausgehend, hat sich die Erfindung zur Aufgabe gemacht, den durch die Ausgleichsöffnung bedingten Leerweg des Betätigungskolbens zu verringern, ohne den Durchsatz von Hydraulikflüssigkeit zu behindern.

Die Lösung der Aufgabe ergibt sich aus dem kennzeichnenden Teil des Anspruchs 1 und besteht im Prinzip darin, eine im Querschnitt längliche Ausgleichsöffnung vorzusehen, wobei die Längsachse der Querschnittsfläche quer zur Achse des Geberzylinders liegt und die in Betätigungsrichtung vom Kolben zu überstreichende Breite der Öffnung kleiner als der Durchmesser bekannter Ausgleichsbohrungen ist. Im Hinblick auf einen ungehinderten Durchsatz von Hydraulikflüssigkeit scheint eine nicht allzu langgesteckte Ellipse die günstigste Form für den Querschnitt einer erfindungsgemäßen Ausgleichsöffnung zu sein.

Wählt man nun beispielsweise die elliptische Querchnittsfläche im wesentlichen so groß wie die von bekannten Ausgleichsbohrungen, so ändert sich im wesentlichen nichts an ihrem Flüssigkeitsdurchsatz, aber die vom Betätigungskolben zu überstreichende Breite der Öffnung und damit der Leerweg sind vorteilhaft reduziert.

Am günstigsten bezüglich einer minimalen vom Betätigungskolben zu überstreichenden Breite der Ausgleichsöffnung ist es, wenn gemäß Anspruch 2 die Durchtrittsachse der Öffnung senkrecht auf der Achse des Geberzylinders steht.

Im Rahmen der Erfindung wird mit Anspruch 3 auch für ein Verfahren zur Fertigung einer erfindungsgemäßen Ausgleichsöffnung um Schutz ersucht. Der erste Schritt des Verfahrens besteht darin, in die Wand des Zylindergehäuses von der Außenseite her eine Bohrung einzubringen, deren Tiefe geringer ist als die Stärke der Zylinderwand. Dadurch wird die Wandstärke so weit vermindert, daß im Bereich dieser Bohrung der zweite Verfahrensschritt ausgeführt werden kann, der darin besteht, eine Öffnung mit länglichem, vorzugsweise elliptischem Querschnitt auszustanzen, die dann zusammen mit der genannten Bohrung eine durchgehende Ausgleichsöffnung bildet.

Nach dem vorbereitenden ersten Verfahrensschritt kann im zweiten Schritt auf einfache Weise eine Öffnung mit beliebig geformter, insbesondere elliptischer Querschnittsfläche erzeugt werden, die in den Druckraum des Geberzylinders einmündet. Dabei werden die Fertigungskosten relativ gering gehalten.

Am günstigsten ist es, zur Ausführung des zweiten Verfahrensschritts gemäß Anspruch 4 einen Stempel mit elliptischem Querschnitt zu verwenden.

Das Verfahren läßt sich noch weiter verbessern, indem die längliche Öffnung nach Anspruch 5 von der Innenseite des Zylindergehäuses her in Richtung der Bohrung gestanzt wird. Auf diese Weise entsteht auf der Zylinderinnenfläche kein vorstehender Grat, der das gleichmäßige Gleiten des Betätigungskolbens im Zylinder oder die Funktion seiner Dichtmanschette beeinträchtigen könnte.

Ein Ausführungsbeispiel der Erfindung wird nachfolgend anhand zweier Zeichnungen näher erläutert. Funktionell gleiche Teile sind in beiden Zeichnungen mit gleichen Bezugszeichen versehen. Nur die für das Verständnis der Erfindung wesentlichen Teile sind bezeichnet.

Es zeigen
- Fig. 1: einen Hauptzylinder einer hydraulischen Bremsanlage im Schnitt,
- Fig. 2: einen vergrößerten Ausschnitt aus Fig. 1 und zwei Draufsichten auf eine erfindungsgemäße Ausgleichsöffnung.

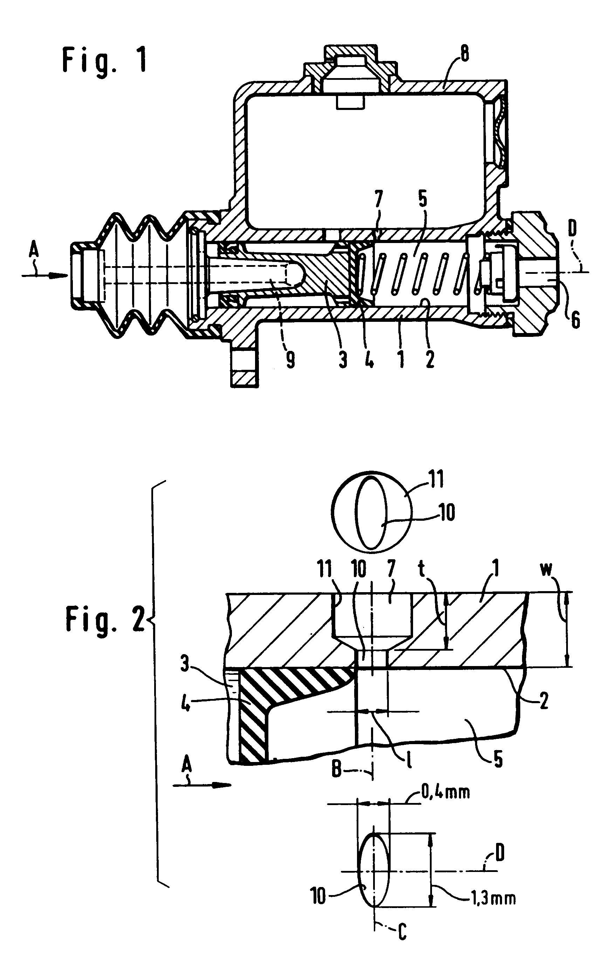

Der in Fig. 1 dargestellte Hauptzylinder einer hydraulischen Bremsanlage für Kraftfahrzeuge weist ein Zylindergehäuse 1 mit einer Innenbohrung 2 auf, in der ein Betätigungskolben 3 mit einer Dichtmanschette 4 gleitend geführt ist und einen mit Hydraulikflüssigkeit gefüllten Druckraum 5 begrenzt. Der Druckraum 5 ist über eine Öffnung 6, die sich am Ende des Zylindergehäuses 1 gegenüber dem Betätigungskolben 3 befindet, mittels nicht gezeigter Hydraulikleitungen mit den ebenfalls nicht gezeigten Radbremszylindern hydraulisch verbunden. Die Oberseite des Zylindergehäuses 1 weist eine kleine Ausgleichsöffnung 7 auf, die auf ihrer einen Seite in den Druckraum 5 und auf der anderen Seite in einen mit Hydraulikflüssigkeit gefüllten Vorratsbehälter 8 einmündet. In Fig. 1 befindet sich bei nicht betätigter Bremsanlage der Kolben 3 in Ruhestellung und die Ausgleichsöffnung 7 wird von der Dichtmanschette 4 gerade freigegeben, so daß Bremsflüssigkeit aus dem Vorratsbehälter 8 in den Druckraum 5 fließen kann oder umgekehrt. Zur Betätigung der Bremsanlage wird der Kolben 2 mittels einer Schubstange 9 in axialer Richtung A geschoben. Dabei gleitet die Dichtmanschette 4 über die Ausgleichsöffnung 7 und verschließt diese. Erst jetzt kann im Druckraum 5 durch eine weitere Bewegung des Kolbens 3 in Richtung A hydraulischer Druck zur Betätigung der Radbremszylinder aufgebaut werden. Der bis zum Verschließen der Ausgleichsöffnung 7 zurückgelegte Weg "l" des Betätigungskolbens ist also ein Leerweg (s. Fig. 2).

In Fig. 2 ist eine erfindungsgemäße Ausgleichsöffnung 7 im Schnitt und in der Draufsicht aus zwei Richtungen vergrößert dargestellt. Sie weist an ihrem in den Druckraum 5 einmündenden Ende senkrecht zur Durchtrittsachse B einen elliptischen Querschnitt 10 auf, dessen Längsachse C senkrecht zur Zylinderachse D ist. Die Breite der Ellipse beträgt 0,4 mm und ihre Länge 1,3 mm. Die sich daraus ergebende Fläche ist etwa gleich der Fläche eines Kreises mit 0,7 mm Durchmesser. Bei der Betätigung der Bremse muß der Kolben 3 lediglich eine Strecke von 0,4 mm zurücklegen, bis die Dichtmanschette 4 das elliptisch geformte Ende der Ausgleichsöffnung 7 verschließt. Bei bekannten Ausgleichsbohrungen mit flächengleichem kreisförmigem Querschnitt müssen 0,7 mm zurückgelegt werden. Der Leerweg des Betätigungskolbens 3 wird bei diesem Ausführungsbeispiel durch die erfindungsgemäße Ausgleichsöffnung 7 um 0,3 mm, also um 43% verkürzt.

Zur Fertigung einer erfindungsgemäßen Ausgleichsöffnung 7 wird zuerst in die Wand des Zylindergehäuses 1 von der Außenseite her eine Bohrung 11 eingebracht, deren Tiefe "t" geringer ist als die Wandstärke "w" und deren Durchmesser größer ist als eine zu erzeugende elliptische Öffnung. Muttels eines Stempels mit elliptischem Querschnitt wird dann die Wand des Zylindergehäuses 1 an der Stelle der Bohrung 11 von innen nach außen durchstanzt, wobei die elliptische Öffnung entsteht, die in den Druckraum 5 mündet. Durch das Stanzen von innen nach außen wird vermieden, daß an den Kanten zwischen der elliptischen Öffnung und der Fläche der Innenbohrung 2 des Zylindergehäuses 1 ein Grat entsteht, der die Dichtmanschette 4 verletzen und ihre Funktion beeinträchtigen könnte.

## Patentansprüche

1. Geberzylinder oder Hauptzylinder für hydraulische Anlagen, bestehend aus einem Zylindergehäuse (1) mit einer Innenbohrung (2), in der mindestens ein Betätigungskolben (3) gleitend geführt ist und mindestens einen mit Hydraulikflüssigkeit gefüllten Druckraum (5) begrenzt, der mit den zu betätigenden Einrichtungen der Anlage hydraulisch in Verbindung (6) steht, wobei das Zylindergehäuse (1) mindestens eine kleine Ausgleichsöffnung (7) aufweist, die in den genannten Druckraum (5) mündet und so angeordnet ist, daß
a) die Ausgleichsöffnung (7) vom Betätigungskolben (3) gerade freigegeben wird, wenn sich dieser in Ruhestellung befindet und Hydraulikflüssigkeit aus einem Vorratsbehälter (8) in den genannten Druckraum (5) fließen kann oder umgekehrt und daß
b) die Ausgleichsöffnung (7) bei der Betätigung des Betätigungskolbens (3) von der Umfangsfläche des Betätigungskolbens (3) bzw. seiner Dichtmanschette (4) verschlossen wird, um den Aufbau hydraulischen Drucks im genannten Druckraum (5) zu ermöglichen, dadurch **gekennzeichnet,** daß die Ausgleichsöffnung (7) zumindest an ihrem in den genannten Druckraum (5) einmündenden Ende, senkrecht zu ihrer Durchtrittsachse (B) betrachtet, einen länglichen, vorzugsweise elliptischen Querschnitt (10) aufweist, dessen Längsachse (C) quer zur Zylinderachse (D) liegt und daß die in Richtung der Zylinderachse (D) gemessene Breite der Ausgleichsöffnung (7) an ihrer Einmündung kleiner ist als der Durchmesser von Ausgleichsbohrungen mit flächengleichem kreisförmigem Querschnitt.

2. Geberzylinder nach Anspruch 1, dadurch **gekennzeichnet,** daß die Durchtrittsachse (B) der Ausgleichsöffnung (7) senkrecht auf der Achse (D) des Geberzylinders steht.

3. Verfahren zur Fertigung einer Ausgleichsöffnung in einem Geberzylinder für hydraulische Anlagen nach Anspruch 1 oder 2, **gekennzeichnet** durch folgende Verfahrensschritte:
- In die Wand des Zylindergehäuses (1) wird von der Außenseite her eine Bohrung (11) eingebracht, deren Tiefe (t) geringer ist als die Wandstärke (w);
- anschließend wird im Bereich der durch die Bohrung (11) verminderten Wandstärke eine Öffnung mit länglichem, vorzugsweise elliptischem Querschnitt (10) ausgestanzt, die zusammen mit der Bohrung (11) eine durchgehende Ausgleichsöffnung (7) bildet.

4. Verfahren nach Anspruch 3, dadurch **gekennzeichnet,** daß zum Stanzen der genannten Öffnung im zweiten Verfahrensschritt ein Stempel mit elliptischem Querschnitt verwendet wird.

5. Verfahren nach Anspruch 3 oder 4, dadurch **gekennzeichnet,** daß die im zweiten Verfahrensschritt erzeugte Öffnung von der Innenseite des Zylindergehäuses (1) her in Richtung der Bohrung (11) gestanzt wird.

## Claims

1. Generating cylinder or master cylinder for hydraulic systems comprising a cylinder housing (1) with an internal bore (5) wherein at least one actuating piston (3) is slidingly guided and confines at least one pressure chamber (5) filled with hydraulic fluid, and being in hydraulic connection (6) with the installations of the system to be actuated, the cylinder housing (1) being provided with at least one small compensation port (7) which extends into said pressure chamber (5) and is arranged such that
a) the compensation port (7) is just released by the actuating piston (3) when the latter is in its inoperative position and hydraulic fluid can flow from a storage reservoir (8) into said pressure chamber (5) or vice versa, and that
b) the compensation port (7) is closed by means of the circumferential area of the actuating piston (3) and/or its sealing cup (4) when the actuating piston (3) is actuated so that hydraulic pressure can be built up within said pressure chamber (5),
**characterized** in that the compensation port (7) is provided, at least at its end extending into said pressure chamber (5), viewed vertically to its passage axis (B), with a longish, preferably elliptical, cross section (10) whose longitudinal axis (C) runs transversely to the cylinder axis (D), and in that the width of the compensation port (7) measured in the direction of the cylinder axis (D) is, at its mouth, smaller than the diameter of compensation ports with a circular cross section which is equal in area.

2. Generating cylinder as claimed in claim 1, **characterized** in that the passage axis (B) of the compensation port (7) is arranged vertically to the axis (D) of the generating cylinder.

3. A method of manufacturing a compensation port in a generating cylinder for hydraulic systems as claimed in claim 1 or 2,
**characterized** by the following process steps:
- a bore (11) is made into the wall of the cylinder housing (1) from the outside, the depth (t) of said bore being smaller than the wall thickness (w);
- subsequently, within the area of the wall thickness reduced by the bore (11), an opening with a longish, preferably elliptical, cross section (10) is punched out which forms, together with the bore (11), a continuous compensation port (7).

4. A method as claimed in claim 3,
**characterized** in that a punch with an elliptical cross section is used for punching out the
mentioned opening in a second process step.

5. A method as claimed in claim 3 or 4,
**characterized** in that the opening produced in the second process step is punched out from the inside of the cylinder housing (1) in the direction of the bore (11).

## Revendications

1. Cylindre générateur de pression ou maître-cylindre pour système hydraulique, constitué d'un boitier de cylindre (1) comportant un alésage intérieur (2) dans lequel au moins un piston d'actionnement (3) est guidé d'une manière coulissante et dans lequel est délimitée au moins une chambre de pression (5) qui est remplie d'un liquide hydraulique et qui communique (6) sur le plan hydraulique avec les dispositifs du système qui sont à actionner, le boîtier de cylindre (1) comportant au moins un petit orifice d'équilibrage (7) qui débouche dans la susdite chambre de pression (5) et qui est agencé d'une façon telle que :
a) l'orifice d'équilibrage (7) est dégagé par le piston d'actionnement (3) juste au moment où ce dernier est situé en position de repos et où du liquide hydraulique peut passer d'un récipient de stockage (8) à la susdite chambre de pression (5) ou vice versa et que,
b) lors de l'actionnement du piston d'actionnement (3), l'orifice d'équilibrage (7) est obturé par la surface périphérique du piston d'actionnement (3) ou de sa coupelle d'étanchéité (4), afin de permettre l'établissement d'une pression hydraulique dans la susdite chambre de pression (5), caractérisé en ce qu'au moins à l'une de ses extrémités qui débouche dans la susdite chambre de pression (5), l'orifice d'équilibrage (7) comporte, perpendiculairement à son axe de passage (B), une section transversale (10) qui est allongée, de préférence elliptique, et dont l'axe longitudinal (C) est perpendiculaire à l'axe (D) du cylindre et en ce qu'à l'endroit où l'orifice d'équilibrage (7) débouche, la largeur de cet orifice, mesurée suivant la direction de l'axe (D) du cylindre est plus petite que le diamètre de perçages d'équilibrage ayant une section transversale circulaire de même aire.

2. Cylindre générateur de pression selon la revendication 1, caractérisé en ce que l'axe de passage (B) de l'orifice d'équilibrage (7) est perpendiculaire à l'axe (D) du cylindre générateur.

3. Procédé de réalisation d'un orifice d'équilibrage dans un cylindre générateur, pour système hydraulique, selon l'une des revendications 1 et 2, caractérisé par les opérations de procédé qui suivent :
- dans la paroi du boîtier de cylindre (1), on ménage à partir du côté extérieur un perçage (11) dont la profondeur (t) est inférieure à l'épaisseur (w) de la paroi,
- puis, dans la zone où l'épaisseur de paroi est réduite du fait de la présence du perçage (11), on découpe à l'emporte-pièce un orifice ayant une section transversale (10) allongée, de préférence elliptique, qui forme avec le perçage (11) un orifice d'équilibrage (7) traversant de part en part.

4. Procédé selon la revendication 3, caractérisé en ce que, pour découper à l'emporte-pièce ledit orifice dans la seconde opération du procédé, on utilise un poinçon à section transversale elliptique.

5. Procédé selon l'une des revendications 3 et 4, caractérisé en ce que c'est du côté intérieur du boîtier de cylindre (1) vers le perçage (11) qu'on découpe à l'emporte-pièce l'orifice réalisé dans la seconde opération de procédé.
